# EUROPÄISCHE PATENTANMELDUNG

(11) **EP 3 609 061 A1**
(43) Veröffentlichungstag der Anmeldung: **12.02.2020**
(21) Anmeldenummer: 19190272.5
(22) Anmeldetag: 06.08.2019
(51) Int. Cl.: H02M 1/12, H02M 1/44, H02M 1/00

(54) **ANTRIEBSSCHALTUNG ZUM ANTREIBEN EINES ELEKTRONISCH KOMMUTIERTEN MOTORS**

(30) Priorität: 11.08.2018 DE 102018006357
(71) Anmelder: Diehl AKO Stiftung & Co. KG, 88239 Wangen (DE)
(72) Erfinder: Weinmann, Martin, 88339 Bad Waldsee (DE); Schmid, Andreas, 88239 Wangen im Allgäu (DE); Tinius, Sebastian, 91207 Lauf (DE)
(74) Vertreter: Diehl Patentabteilung

(57) **Zusammenfassung**

Eine Antriebsschaltung (10) zum Antreiben eines elektronisch kommutierten Motors (12) enthält einen Wechselstromanschluss (22), an den ein Versorgungsnetz (24) anschließbar ist, einen Gleichrichter (20), der eingangsseitig mit dem Wechselstromanschluss (22) verbunden ist, einen Wechselrichter (16), der eingangsseitig mit dem Gleichrichter (20) verbunden ist und an den die Motorphasen (U, V, W) des Motors (12) anschließbar sind, und einen Gleichspannungszwischenkreis (14) zwischen dem Gleichrichter (20) und dem Wechselrichter (16). Die Antriebsschaltung (10) enthält ferner einen EMV-Filter (28) mit einer kapazitiven Rückkopplung (30) mit wenigstens einem Y-Kondensator (C1, C2), der zwischen einen Pol des Gleichspannungszwischenkreises (14) und eine Schutzerde (PE) geschaltet ist und insgesamt eine stärkere Isolierung als eine Basisisolierung aufweist.

## Beschreibung

Die vorliegende Erfindung betrifft eine Antriebsschaltung zum Antreiben eines elektronisch kommutierten Motors, insbesondere eines Motors eines elektronischen Haushaltsgeräts, und insbesondere eine solche Antriebsschaltung mit einem EMV-Filter und einem Leistungsfaktorkorrekturfilter.

Derartige Antriebsschaltungen erzeugen infolge ihrer hochfrequenten Taktung Funkstörungen, welche sich mittels elektromagnetischer Felder im freien Raum und leitungsgebunden über die Netzanschlussleitungen in Form von hochfrequenten Spannungen und Strömen ausbreiten. Die Antriebsschaltungen sind deshalb üblicherweise mit einem EMV-Filter ausgestattet, mit dem das Versorgungsnetz gegen Störungen aus der Antriebsschaltung und dem angeschlossenen Motor geschützt werden soll.

Die DE 10 2007 058 376 B4 offenbart ein Schaltnetzteil für ein elektronisches Haushaltsgerät, das mit einem EMV-Filter ausgestattet ist. Der EMV-Filter enthält jeweils eine Drossel in der Phasenleiterverbindung und der Neutralleiterverbindung zum Versorgungsnetz, einen parallel zum Wechselstromanschluss geschalteten Kondensator und einen parallel zu diesem geschalteten Ableitwiderstand. Außerdem sind die Phasenleiterverbindung und die Neutralleiterverbindung jeweils über einen Y-Kondensator mit Schutzerde gekoppelt.

Ferner werden solche Antriebsschaltungen häufig mit einem aktiven Leistungsfaktorkorrektur (PFC) - Filter zum Beispiel in Hochsetzsteller-Topologie ausgestattet. Beim Einsatz eines aktiven PFC-Filters kann es allerdings durch einen Isolationsfehler an der genannten kapazitiven Rückkopplung zu Schutzerde zu einem permanenten Gleichstromanteil auf Schutzerde kommen, was die ordnungsgemäße Funktionalität eines Fehlerstromschutzschalters beeinträchtigen kann.

Es ist deshalb die Aufgabe der Erfindung, eine verbesserte Antriebsschaltung zum Antreiben eines elektronisch kommutierten Motors zu schaffen, die oben genannte Nachteile beim Einsatz eines herkömmlichen EMV-Filters vermeidet.

Diese Aufgabe wird gelöst durch die Antriebsschaltung mit den Merkmalen des Anspruchs 1. Besonders vorteilhafte Ausgestaltungen und Weiterbildungen der Erfindung sind Gegenstand der abhängigen Ansprüche.

Die erfindungsgemäße Antriebsschaltung zum Antreiben eines elektronisch kommutierten Motors weist einen Wechselstromanschluss, an den ein Versorgungsnetz anschließbar ist, einen Gleichrichter, der eingangsseitig mit dem Wechselstromanschluss verbunden ist, einen Wechselrichter, der eingangsseitig mit dem Gleichrichter verbunden ist und an den die Motorphasen des Motors anschließbar sind, einen Gleichspannungszwischenkreis zwischen dem Gleichrichter und dem Wechselrichter und einen EMV-Filter auf. Gemäß der Erfindung weist der EMV-Filter eine kapazitive Rückkopplung mit wenigstens einem Y-Kondensator auf, die zwischen einen Pol des Gleichspannungszwischenkreises und eine Schutzerde geschaltet ist und insgesamt eine stärkere Isolierung als eine Basisisolierung aufweist. Über den wenigstens einen Y-Kondensator werden die kapazitiv gekoppelten Störströme auf die Schutzerde, bedingt durch die parasitären Kapazitäten der durch den Wechselrichter getakteten Motorphasen, auf den Spannungszwischenkreis zurückgeführt und breiten sich daher nicht über den Wechselstromanschluss nach außen ins Versorgungsnetz weiter aus, wo sie gegebenenfalls EMV-Störungen auslösen könnten.

Durch die Verwendung einer stärkeren Isolierung als eine einfache Basisisolierung in der kapazitiven Rückkopplung zwischen einem Pol des Gleichspannungszwischenkreises und Schutzerde können beim Auftreten eines Isolationsfehlers an einem Teil der stärkeren Isolierung durch den fehlerfrei verbleibenden Teil der Isolierung das Entstehen eines Fehlergleichstroms auf Schutzerde verhindert werden, wodurch eine ordnungsgemäße Funktionalität eines Fehlerstromschutzschalters gewährleistet und/oder ein einfacherer und kostengünstigerer Fehlerstromschutzschalter (z.B. vom Typ A) eingesetzt werden kann, und der Personenschutz durch den verbleibenden Teil der Isolierung bzw. den ordnungsgemäß funktionierenden Fehlerstromschutzschalter verbessert wird .

Y-Kondensatoren sind Sicherheitskondensatoren, die zum Beispiel nach der IEC-Norm 60384-1 klassifiziert sind. In diesem Zusammenhang ist gemäß der Haushaltsgerätenorm EN 60335, Abschnitt 3.3, eine Basisisolierung eine Isolierung aktiver Teile zum grundlegenden Schutz gegen elektrischen Schlag; eine zusätzliche Isolierung eine unabhängige Isolierung zusätzlich zur Basisisolierung, die im Falle des Versagens der Basisisolierung den Schutz gegen elektrischen Schlag sicherstellt; eine doppelte Isolierung ein Isolationssystem bestehend aus Basisisolierung und zusätzlicher Isolierung; und eine verstärkte Isolierung eine einzige Isolierung aktiver Teile, die unter den in dieser Norm festgelegten Bedingungen einen gleichwertigen Schutz gegen elektrischen Schlag gewährleistet wie eine doppelte Isolierung. Eine stärkere Isolierung als eine Basisisolierung kann somit zum Beispiel durch eine doppelte Isolierung und/oder eine verstärkte Isolierung gebildet sein. Allgemein ist die stärkere Isolierung als eine Basisisolierung vorzugsweise wenigstens doppelt so stark wie eine Basisisolierung.

Die kapazitive Rückkopplung zur Schutzerde kann an einem Pol des Gleichspannungszwischenkreises oder an beiden Polen des Gleichspannungszwischenkreises vorgesehen sein. Bei nur einpoliger kapazitiver Rückkopplung ist diese vorzugsweise zwischen dem Pluspol des Gleichspannungszwischenkreises und Schutzerde vorgesehen.

Der EMV-Filter weist neben der kapazitiven Rückkopplung eines Pols des Gleichspannungszwischenkreises zur Schutzerde vorzugsweise weitere kapazitive, induktive und / oder resistive Elemente auf.

Die Erfindung ist auf keine spezielle Motorart beschränkt. Bei dem Motor der Motoranordnung handelt es sich insbesondere um einen elektronisch kommutierten Motor wie beispielsweise einen Synchronmotor oder Asynchronmotor, einen Wechselstrommotor, einen Drehstrommotor oder dergleichen.

Der Wechselrichter der Antriebsschaltung weist vorzugsweise eine Wechselrichter-Brückenschaltung, bevorzugt mit mehreren Leistungsschaltern (z.B. MOSFETs oder IGBTs mit antiparallel geschalteten Dioden) auf. Der Wechselrichter ist entsprechend dem angeschlossenen Motor vorzugsweise mehrphasig ausgestaltet. Der Gleichspannungszwischenkreis der Antriebsschaltung weist vorzugsweise einen Zwischenkreiskondensator auf. Der Gleichrichter der Antriebsschaltung ist vorzugsweise als Brückengleichrichter mit mehreren Gleichrichterdioden ausgebildet.

In einer Ausgestaltung der Erfindung weist die kapazitive Rückkopplung des EMV-Filters eine Reihenschaltung aus wenigstens zwei Y-Kondensatoren auf, die jeweils zumindest mit einer Basisisolierung versehen sind. Bei Auftreten eines Isolationsfehlers an einem der beiden Y-Kondensatoren enthält die kapazitive Rückkopplung weiterhin einen Y-Kondensator mit intakter Isolierung, sodass ein Fehlergleichstrom auf Schutzerde verhindert und der Personenschutz verbessert werden kann.

In einer anderen Ausgestaltung der Erfindung ist die kapazitive Rückkopplung des EMV-Filters durch einen Y-Kondensator mit einer doppelten oder verstärkten Isolierung gebildet. Bei Auftreten eines Isolationsfehlers an einem Teil der doppelten oder verstärkten Isolierung des Y-Kondensators enthält die kapazitive Rückkopplung weiterhin eine intakte Isolierung, sodass ein Fehlergleichstrom auf Schutzerde verhindert und der Personenschutz verbessert werden kann.

In einer Ausgestaltung der Erfindung weist der EMV-Filter ferner ein resistives und/oder induktives Dämpfungsglied in Reihe zur kapazitiven Rückkopplung zwischen dem Pol des Gleichspannungszwischenkreis und der Schutzerde auf.

In einer Ausgestaltung der Erfindung ist der EMV-Filter zwischen den Wechselstromanschluss und den Gleichrichter geschaltet.

In einer weiteren Ausgestaltung der Erfindung weist die Antriebsschaltung ferner einen Leistungsfaktorkorrekturfilter (PFC-Filter) auf, der zwischen den Gleichrichter und den Gleichspannungszwischenkreis geschaltet ist und vorzugsweise ein in Hochsetzsteller-Topologie ausgestalteter PFC-Filter ist.

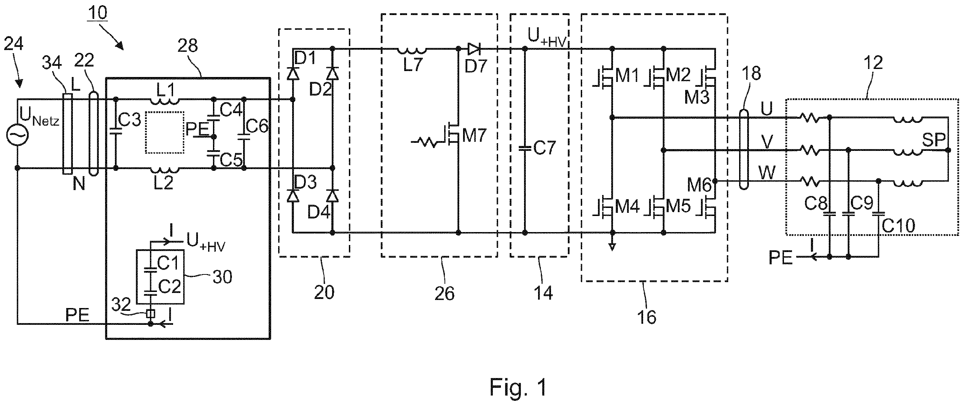

Obige sowie weitere Merkmale und Vorteile der Erfindung werden aus der nachfolgenden Beschreibung eines bevorzugten, nichteinschränkenden Ausführungsbeispiels anhand der beiliegenden Zeichnung besser verständlich. Darin zeigt die einzige Figur 1, zum Teil schematisch, ein Schaltbild einer Antriebsschaltung mit angeschlossenem Motor gemäß einem Ausführungsbeispiel der Erfindung.

Fig. 1 zeigt beispielhaft eine erfindungsgemäße Antriebsschaltung 10 zum Antreiben eines elektronischen kommutierten Motors 12. Im Beispiel von Fig. 1 handelt es sich um einen dreiphasigen bürstenlosen Drehstrommotor 12 mit drei Motorphasen U, V, W, die an einem Sternpunkt SP miteinander verbunden sind. Der Motor 12 wird aus einem Gleichspannungszwischenkreis 14 über einen Wechselrichter 16 gespeist. Der Gleichspannungszwischenkreis 14 weist einen Zwischenkreiskondensator C7 auf, und der Wechselrichter 16 weist eine in diesem Ausführungsbeispiel dreiphasige Wechselrichter-Brückenschaltung mit insgesamt sechs Leistungsschaltern M1 bis M6 (z.B. MOSFETs oder IGBTs mit antiparallel geschalteten Dioden) in seinen Halbbrücken auf. Die drei Motorwicklungen des Motors 12 sind über ein Motorkabel an einen Motorphasenanschluss 18 angeschlossen, der mit den drei Mittelabgriffen der Halbbrücken des Wechselrichters 16 verbunden ist. Der Motor 12 und das Motorkabel haben jeweils drei Motorphasen U, V, W.

Eingangsseitig ist der Gleichspannungszwischenkreis 14 über einen Gleichrichter 20 mit einem Wechselstromanschluss 22 verbunden. Über den Wechselstromanschluss 22 kann die Antriebsschaltung 10 mit einem Versorgungsnetz 24 verbunden werden. Im Beispiel von Fig. 1 ist das Versorgungsnetz 24 ein einphasiges Stromnetz, ist die Antriebsschaltung 10 mit dem Phasenleiter L und dem Neutralleiter N des einphasigen Stromnetzes verbunden, und hat das Versorgungsnetz 24 zudem eine Schutzerdung PE. Der Gleichrichter 20 weist in diesem Beispiel eine Gleichrichter-Brückenschaltung mit insgesamt vier Gleichrichterdioden D1 bis D4 auf.

Wie in Fig. 1 dargestellt, ist zwischen den Gleichrichter 20 und den Gleichspannungszwischenkreis 14 bevorzugt zudem ein Leistungsfaktorkorrektur (PFC) - Filter 26 geschaltet. Der PFC-Filter 26 ist in diesem Beispiel in einer Hochsetzsteller-Topologie ausgestaltet und enthält insbesondere eine Induktivität L7, einen Schalter M7 und eine Gleichrichterdiode D7.

Die Antriebsschaltung 10 hat ferner eine Steuereinrichtung (nicht dargestellt) zum Beispiel in Form eines Mikrocontrollers, die die Leistungsschalter M2 bis M7 des Wechselrichters 16 und den Schalter M7 des PFC-Filters 26 über entsprechende Steuersignale ansteuert.

Außerdem enthält die Antriebsschaltung 10 einen EMV-Filter 28, der in diesem Ausführungsbeispiel zwischen den Gleichrichter 20 und den Wechselstromanschluss 22 geschaltet ist. In der beispielhaften Ausführungsform von Fig. 1 enthält dieser EMV-Filter 28 eine erste Induktivität L1 in der Phasenleiterverbindung zum Phasenleiter L des Versorgungsnetzes 24, eine zweite Induktivität L2 in der Neutralleiterverbindung zum Neutralleiter N des Versorgungsnetzes 24, zwei Kondensatoren C3, C6 zur kapazitiven Kopplung zwischen dem Phasenleiter L und dem Neutralleiter, sowie zwei Kondensatoren C4, C5 zur Kopplung des Phasenleiters L bzw. des Neutralleiters N mit Schutzerde PE. In anderen Ausführungsformen der Erfindung kann der EMV-Filter 28 auch andere und/oder weitere kapazitive, induktive oder resistive Elemente enthalten.

Wie in Fig. 1 veranschaulicht, enthält der EMV-Filter 28 erfindungsgemäß zudem eine kapazitive Rückkopplung 30 zwischen einem Pol des Gleichspannungszwischenkreises 14 (hier: Pluspol, dargestellt durch Zwischenkreisspannung U_{+HV}) und der Schutzerde PE. Im Ausführungsbeispiel von Fig. 1 weist diese kapazitive Rückkopplung 30 eine Reihenschaltung aus zwei Y-Kondensatoren C1, C2 auf, die jeweils mit einer einfachen Basisisolierung versehen sind. In einer alternativen Ausführungsform der Erfindung besteht die kapazitive Rückkopplung 30 aus einem Y-Kondensator C1, der mit einer doppelten oder verstärkten Basisisolierung versehen ist. Zudem ist in dem EMV-Filter 28 optional ein resistives oder induktives Dämpfungsglied 32 in Reihe zur kapazitiven Rückkopplung 30 geschaltet.

In Fig. 1 werden über die kapazitive Rückkopplung 30 der beiden Y-Kondensatoren C1 und C2 die kapazitiv gekoppelten Stör-Ströme I auf der Schutzerde PE, bedingt durch die parasitären Kapazitäten C8, C9, C10 der durch den Wechselrichter 16 getakteten Motorphasen U, V, W, auf den Spannungszwischenkreis 14 zurückgeführt und breiten sich daher nicht über den Wechselstromanschluss 22 nach außen ins Versorgungsnetz 24 weiter aus, wo sie gegebenenfalls EMV Störungen auslösen könnten.

Zwischen dem Wechselstromanschluss 22 und dem Versorgungsnetz 24 ist vorzugsweise ein Fehlerstromschutzschalter 34 vorgesehen. Durch die Verwendung einer kapazitiven Rückkopplung 30 mit einer insgesamt stärkeren Isolierung als einer einfachen Basisisolierung kann erreicht werden, dass auch im Fall eines Isolationsfehlers an der Rückkopplung 30 zumindest ein Teil der Isolierung noch intakt ist. Speziell im Fall von Antriebsschaltungen 10 mit einem PFC-Filter 26 in Hochsetzsteller-Topologie kann so verhindert werden, dass es im Fall eines Isolationsfehlers an der Rückkopplung 30 zu einem kritischen Fehlergleichstrom auf Schutzerde PE aus dem Gleichspannungszwischenkreis 14 kommt. Bei Verwendung der erfindungsgemäßen Antriebsschaltung 10 mit dem EMV-Filter 28 mit kapazitiver Rückkopplung 30 kann deshalb vorteilhafterweise ein kostengünstiger Fehlerstromschutzschalter vom Typ A verwendet werden. Im Vergleich dazu müssen bei herkömmlichen Antriebsschaltungen, deren EMV-Filter eine kapazitive Rückkopplung mit nur einem Y-Kondensator mit einfacher Basisisolierung zwischen einem Pol des Gleichspannungszwischenkreises und der Schutzerde enthält, teurere Fehlerstromschutzschalter zum Beispiel vom Typ B verwendet werden, deren Auslösecharakteristik durch Fehlergleichströme nicht negativ beeinflusst werden.

### BEZUGSZIFFERNLISTE

- 10: Antriebsschaltung
- 12: Motor
- 14: Gleichspannungszwischenkreis
- 16: Wechselrichter
- 18: Motorphasenanschluss
- 20: Gleichrichter
- 22: Wechselstromanschluss
- 24: Versorgungsnetz
- 26: Leistungsfaktorkorrektur (PFC) - Filter
- 28: EMV-Filter
- 30: kapazitive Rückkopplung
- 32: Dämpfungsglied
- 34: Fehlerstromschutzschalter

- C1, C2: Y-Kondensatoren von 30
- C3 - C6: Kapazitäten von 28
- C7: Zwischenkreiskondenator von 14
- C8 - C10: Parasitäre Kapazitäten zwischen den Motorphasen und Schutzerde
- D1 - D4: Gleichrichterdioden von 20
- D7: Gleichrichterdiode von 26
- I: Störstrom kapazitiv gekoppelt
- L: Phasenleiter von 24
- L1, L2: Induktivitäten von 28
- L7: Induktivität von 26
- M1 - M6: Leistungsschalter von 16
- M7: Schalter von 26
- N: Neutralleiter von 24
- PE: Schutzerdung
- SP: Sternpunkt von 12
- U, V, W: Motorphasen

- U_{+HV}: Zwischenkreisspannung
- U_{Netz}: Netzspannung

## Patentansprüche

**1.** Antriebsschaltung (10) zum Antreiben eines elektronisch kommutierten Motors (12), aufweisend:
einen Wechselstromanschluss (22), an den ein Versorgungsnetz (24) anschließbar ist;
einen Gleichrichter (20), der eingangsseitig mit dem Wechselstromanschluss (22) verbunden ist;
einen Wechselrichter (16), der eingangsseitig mittelbar oder unmittelbar mit dem Gleichrichter (20) verbunden ist und an den die Motorphasen (U, V, W) des Motors (12) anschließbar sind;
einen Gleichspannungszwischenkreis (14) zwischen dem Gleichrichter (20) und dem Wechselrichter (16); und
einen EMV-Filter (28),
**dadurch gekennzeichnet, dass**
der EMV-Filter (28) eine kapazitive Rückkopplung (30) mit wenigstens einem Y-Kondensator (C1, C2) aufweist, der zwischen einen Pol des Gleichspannungszwischenkreises (14) und eine Schutzerde (PE) geschaltet ist und insgesamt eine stärkere Isolierung als eine Basisisolierung aufweist.

**2.** Antriebsschaltung nach Anspruch 1, bei welcher
die kapazitive Rückkopplung (30) des EMV-Filters (28) eine Reihenschaltung aus wenigstens zwei Y-Kondensatoren (C1, C2) aufweist, die jeweils zumindest mit einer Basisisolierung versehen sind.

**3.** Antriebsschaltung nach Anspruch 1, bei welcher
die kapazitive Rückkopplung (30) des EMV-Filters (28) durch einen Y-Kondensator (C1) mit einer doppelten oder verstärkten Isolierung gebildet ist.

**4.** Antriebsschaltung nach einem der vorhergehenden Ansprüche, bei welcher
der EMV-Filter (28) ferner ein resistives und/oder induktives Dämpfungsglied (32) in Reihe zur kapazitiven Rückkopplung (30) zwischen dem Pol des Gleichspannungszwischenkreis und der Schutzerde (PE) aufweist.

**5.** Antriebsschaltung nach einem der vorhergehenden Ansprüche, bei welcher
der EMV-Filter (28) zwischen den Wechselstromanschluss (22) und den Gleichrichter (20) geschaltet ist.

**7.** Antriebsschaltung nach einem der vorhergehenden Ansprüche, welche
ferner einen Leistungsfaktorkorrekturfilter (26) aufweist, der zwischen den Gleichrichter (20) und den Gleichspannungszwischenkreis (14) geschaltet ist.

**8.** Antriebsschaltung nach Anspruch 7, bei welcher
der Leistungsfaktorkorrekturfilter (26) ein in Hochsetzsteller-Topologie ausgestalteter Leistungsfaktorkorrekturfilter (26) ist.
